# EUROPEAN PATENT SPECIFICATION

(11) **EP 3 033 946 B1**
(45) Date of publication and mention of the grant of the patent: **31.03.2021**
(21) Application number: 14836510.9
(22) Date of filing: 05.08.2014
(51) Int. Cl.: A23G 1/00, A23G 1/30, A23G 1/20, A23G 1/54, A23G 3/34, A23G 3/28

(54) **METHOD FOR PRODUCING CHOCOLATE AND CHOCOLATE PRODUCED BY SAID METHOD**
VERFAHREN ZUR HERSTELLUNG VON SCHOKOLADE UND IN DIESEM VERFAHREN HERGESTELLTE SCHOKOLADE
PROCÉDÉ DE PRODUCTION DE CHOCOLAT ET CHOCOLAT PRODUIT SELON CE PROCÉDÉ

(30) Priority: 14.08.2013 JP 2013168645
(43) Date of publication of application: 22.06.2016
(73) Proprietor: Lotte Co., Ltd., Tokyo 160-0023 (JP)
(72) Inventor: NAKAO, Takeshi, Saitama-shi Saitama 336-8601 (JP); TAKENAKA, Akira, Saitama-shi Saitama 336-8601 (JP); OGAWA, Katsumi, Saitama-shi Saitama 336-8601 (JP)
(74) Representative: Witte, Weller & Partner Patentanwälte mbB
(86) International application number: PCT/JP2014/070634
(87) International publication number: WO 2015/022884

(56) References cited:
- EP-A1- 2 543 258
- EP-A2- 1 172 038
- WO-A1-2011/064747
- WO-A2-2011/084760
- FR-A- 1 369 375
- GB-A- 758 613
- GB-A- 1 392 703
- GB-A- 1 502 194
- GB-A- 2 405 827
- JP-A- H06 153 799
- JP-A- H10 210 933
- JP-A- H10 210 933
- JP-A- S62 138 140
- JP-A- 2002 199 845
- JP-A- 2002 335 863
- JP-A- 2004 098 647
- JP-B1- S4 628 809

## Description

### TECHNICAL FIELD

The present invention relates to a method for producing chocolate and particularly relates to a production technology of a novel chocolate product.

### BACKGROUND ART

Methods for producing chocolate related to the present invention includes, for example, a method for producing chocolate described in Patent document 1. The method for producing chocolate described in Patent document 1 includes a step of squeezing an ingredient into chocolate dough by inserting a cooled die into a mold. Therefore, the cooled die must be prepared at a time of production, and a manufacturing device is complicated.

Further, Patent document 2 discloses a production method using low-viscous chocolate as a method for producing chocolate. In the production method disclosed in Patent document 2, the low-viscous chocolate sandwiches a solid matter, and this increases the number of production steps.

Moreover, Patent document 3 presents a production method where hot air is blown to a chocolate surface to melt the chocolate surface, onto which a powder is sprinkled to be attached. The production method disclosed in Patent document 3 may lack a stability of a production quality since the hot air is blown in such a manner that only a surface layer of chocolate is melt.

Patent document 4 presents a production method where moisture is used as an adhesion material to make a powder adhere to chocolate, as a different production method.

EP 2 543 258 A1 refers to a method of manufacturing confectionery shells using cold-stamping is provided. The method can also be used to manufacture multilayered confectionery shells and/or confectionery shells comprising inclusions. Scraping means are passed outwardly over the boundary of the mold cavity in two or more different outward directions.

WO 2011/064747 A1 describes a packaged food product comprising a tray containing an edible composition having a layered structure, comprising at least one composite layer comprising puffed cereal grains embedded in a matrix of edible material; and at least one edible coating layer deposited on said composite layer and preferably including chocolate. The matrix of edible material has, in a temperature range of between 20°C and 40°C, and preferably also in the range of from 0°C to 40°C, a pasty consistency such as to maintain its own shape in unconfined conditions.

GB 1 502 194 A1 refers to an apparatus for introducing solid fillers into confectionary. Solid fillers are fed from a storage bin via an inspection zone to a conveyer comprising conveying members which receive a predetermined number of fillers in a predetermined array, and are brought into register with continuously moving molds containing a moldable confectionary mass, when the fillers are discharged into the molds. The fillers may be pressed into the mass after discharge.

### PRIOR ART DOCUMENT

### PATENT DOCUMENT

Patent document 1: Japanese Patent No. 4132659
Patent document 2: Japanese Patent No. 2770117
Patent document 3: Japanese Patent No. 4405104
Patent document 4: Japanese Patent No. 3094209

### SUMMARY OF INVENTION

### PROBLEM TO BE SOLVED BY INVENTION

When chocolate, to which an edible solid ingredient is added, is produced by the production methods according to Patent documents 1 to 4 shown in Background Art, it is difficult to favorably combine the edible solid ingredient to the chocolate, and these production methods can be improved in various ways.

The present Inventors have completed this invention by setting a subject that an edible solid ingredient is sprinkled and attached onto a chocolate surface through a new production method different from the conventional production methods of chocolate to obtain chocolate having a new texture, taste and appearance and a production method thereof.

### SOLUTION TO PROBLEM

The above object is achieved by the method for producing chocolate according to claim 1.

An inventive aspect according to claim 2 is a method for producing chocolate according to claim 1, wherein the filling step includes a step of pouring into the mold liquid chocolate which is melted at a normal temperature from 20 to 30°C and whose temperature is then adjusted to approximately 30°C.

### ADVANTAGEOUS EFFECTS OF INVENTION

According to this invention, at a time of production, a hot air treatment of chocolate and cooling of a used machine are not required, and an edible solid ingredient can be attached to the chocolate at a normal temperature. As a result, chocolate having an unprecedented texture, taste and appearance can be produced.

Further, while chocolate to which an edible solid ingredient is attached has been difficult to be mass-produced, the chocolate can be produced by simple equipment in a low cost and safely as well as in a large amount and stably, and the chocolate can be widely introduced into a market as commercial confectionery.

In particular, by forming chocolate in a chocolate tablet shape, a new category of "a premium chocolate tablet" which is more excellent in a category of so-called "a chocolate tablet," and thus, the entire market of chocolate tablets can be vitalized.

### BRIEF DESCRIPTION OF DRAWINGS

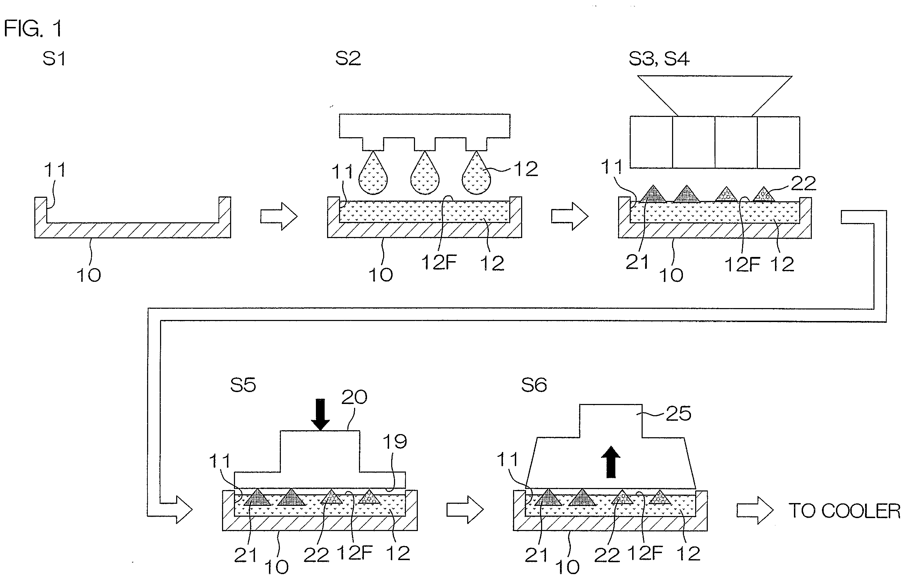

Fig. 1 is a process view schematically showing a production process according to one embodiment of this invention step by step.

### DESCRIPTION OF EMBODIMENT

One embodiment of this invention is described in detail below with reference to a drawing.

Fig. 1 is a process view schematically showing a production process according to one embodiment of this invention step by step.

As described with reference to Fig. 1, a method for producing chocolate according to this invention includes:
S1: a step of preparing a mold;
S2: a step of filling chocolate into the mold;
S3: a topping step (step of sprinkling an edible solid ingredient);
S4: a first attaching step;
S5: a second attaching step; and
S6: an excessive material removing step.

One of characteristics of this embodiment is that all of the above-described steps S1 to S6 (except for a cooling step after the step S6) are performed at a normal temperature from 20 to 30°C. As a result, there is an advantage that equipment for heating and cooling an production installation, for blowing hot air to a production ingredient, and for performing other tusk is unnecessary, and therefore, that a production can be performed safely and stably at a normal temperature.

Each step is concretely described below.

### S1: Mold preparing step

In this step, a mold 10 for producing chocolate is prepared. The mold 10 is provided with a containing recess 11 containing liquid chocolate. The containing recess 11 is a recess which is required to form tablet-shaped chocolate generally having a passport size in plan view.

### S2: Filling step

In this step, the liquid chocolate 12 is filled into the containing recess 11 of the mold 10.

As the chocolate 12 to be filled, the liquid chocolate 12 which is once hotted to 40°C or more and then is regulated to a temperature of about 30°C is used.

### S3: Sprinkling step

In this step, a plurality of edible solid ingredients 21, 22, for example, are sprinkled on the chocolate 12 filled in the containing recess 11 of the mold 10. The edible solid ingredient of the present invention is an edible ingredient which is solid at a normal temperature of 20 to 30°C and is a bit-shaped lump whose long side is 0.025 mm to 20 mm.

The plurality of edible solid ingredients 21, 22 preferably include an edible solid ingredient 22 having a light specific gravity and an edible solid ingredient 21 having a heavy specific gravity. These edible solid ingredients 21, 22 are preferably sprinkled individually with respect to the edible solid ingredient 22 having a light specific gravity and the edible solid ingredient 21 having a heavy specific gravity. Alternatively, different types of edible solid ingredients are preferably sprinkled individually.

The specific gravity of the edible solid ingredient 22 having a light specific gravity used in the present invention is 0.05 to 0.35 when that of water of 4°C is 1, and the specific gravity of the edible solid ingredient 21 having a heavy specific gravity is 0.35 to 1.50.

Further, it is made sure that the edible solid ingredients 21, 22 of respective types are sprinkled (topped) evenly on a surface 12F of the chocolate 12.

Examples of the edible solid ingredient 22 having a light specific gravity include freeze-dried foods (including fruits, vegetables, confectioneries, meats, sea foods and the like) such as a freeze-dried strawberry, puffed foods such as a puff, mango crunch and waffle crunch.

Examples of the edible solid ingredient 21 having a heavy specific gravity include cookie crunch, a diced orange peel, almond crunch, coffee bean crunch, hazelnut crunch, a grape powder, a dried raisin, a diced macadamia, an almond praline, rock salt, a diced dried strawberry, a diced pineapple, a one-eighth-cut dried cranberry, green pepper, a milk chip, a marron chip, biscuit crunch, a diced dried apple, crepe crunch, a chocolate chip, as well as various types of dried fruits, dried vegetables, confectioneries (candies, gummi, tablet confectioneries, chocolate, bakegoods, chewing gum and the like), beans, processed meat products, processed sea food products, processed bean products, supplements, capsulated foods and the like.

Additionally, as an example, a specific gravity of a freeze-dried strawberry is 0.088, that of mango crunch is 0.33, that of a diced orange peel is 0.72, that of almond crunch is 0.49 to 0.63, and that of a chocolate chip is 1.50.

In the sprinkling step, a sprinkling installation which scatters an ingredient nearly uniformly is used to sprinkle the edible solid ingredients 21, 22 onto the surface 12F of the chocolate 12.

Consequently, the surface 12F of the chocolate 12 is in a state where a plurality of types of edible solid ingredients are sprinkled evenly and approximately uniformly.

While this embodiment is a case where a plurality of types of edible solid ingredients are sprinkled, a single edible solid ingredient may be sprinkled.

### S4: First attaching step

In this step, the mold 10 is vibrated, and a specific ingredient in the edible solid ingredients 21, 22 sprinkled on the liquid chocolate 12 in the mold 10, more specifically, the edible solid ingredient 21 which has a heavy specific gravity and a shape making itself easily sink into the chocolate 12, is adhered to the chocolate surface 12F by vibration to be attached to the chocolate surface 12F.

When the mold 10 is vibrated, the sprinkled edible solid ingredient 22 having a light specific gravity does not sink down by vibration because of the light specific gravity thereof, and does often not adhere to or attach to the chocolate surface 12F.

If the mold is not vibrated in this step, the edible solid ingredients 21, 22 having a relatively small size cannot be attached sufficiently to the chocolate surface 12F.

### S5: Second attaching step

In this step, the edible solid ingredient 22 having a light specific gravity is attached to the chocolate surface 12F. This step is also referred to as a stamping step.

In this step, the edible solid ingredients 21, 22 sprinkled on the chocolate 12 are pressed by a stamping machine 20 having a pressing surface 19 with a shape (rectangular shape in plan view) corresponding to a planar shape of the chocolate 12 to be produced. Thus, the edible solid ingredients 21, 22 pressed lightly by the pressing surface 19 are adhered and attached to the chocolate surface 12F.

If the stamping is not performed in this step, the edible solid ingredient 22 having the light specific gravity cannot be attached sufficiently to the chocolate surface 12F.

### S6: Removing step

After the second attaching step, all the edible solid ingredients are not necessarily attached to the chocolate 12. There are also remaining edible solid ingredients 21, 22 which are not attached to the chocolate 12.

Thus, in the removing step, the excess edible solid ingredients 21, 22 remaining on the chocolate 12 and the mold 10 are sucked and removed by using a negative pressure suction device (vacuum device) 25.

Thereafter, the chocolate 12 to which the edible solid ingredients 21, 22 are attached and which is accommodated in the mold 10 and the containing recess 11 thereof is transported to a cooler, and is cooled along with the mold 10, and the chocolate 12 to which the edible solid ingredients 21, 22 are attached is solidified. Then, after the chocolate becomes solid, the chocolate 12 to which the edible solid ingredients 21, 22 are attached is removed from the mold 10 and becomes a product.

The chocolate 12 used in this embodiment is a chocolate where general raw materials are blended in a range shown in Table 1. In Table 1, units are shown by % by weight. Further, the chocolate may be any type such as sepia chocolate, milk chocolate and white chocolate.

**Table 1**

| Base chocolate | |
|---|---|
| Raw material | Blending range |
| Cacao mass | 0 % to 60 % |
| Sugar | 15 % to 45 % |
| Whole milk powder | 0 % to 40 % |
| Cocoa butter | 0 % to 40 % |
| Vegetable oil and fat | 0 % to 20 % |
| Emulsifier | 0 % to 2 % |
| Perfume | 0 % to 1 % |

### EXAMPLES

Specific blended ingredients and the like in Examples are described below.

Chocolate of the blending shown in above Table 1 was used as chocolate.

On the other hand, with respect to an edible solid ingredient to be sprinkled, the ingredients shown in following Table 2 were attached per product within the blending range shown in the table. Units are shown in Table 2 by % by weight.

**Table 2**

| Product comparison | | | | |
|---|---|---|---|---|
| Chocolate is shaped into tablet-shaped chocolate of 35 to 45 g, and then, the following respective ingredients are sprinkled. Ranges of added amounts are as shown below. | | | | |

| Product No. | Ingredient | Size | Specific gravity | Blending range |
|---|---|---|---|---|
| 1 | Freeze-dried strawberry | 2 to 7 mm long side | Light | Added in a proportion of 0.5 to 10 % of the product |
| | Cookie crunch | 1 to 6 mm long side | Heavy | Added in a proportion of 0.5 to 10 % of the product |
| | Mango crunch | 1 to 6 mm long side | Light | Added in a proportion of 0.5 to 10 % of the product |
| 2 | Diced orange peel | 2 to 10 mm long side | Heavy | Added in a proportion of 0.5 to 10 % of the product |
| | Almond crunch | 1 to 10 mm long side | Heavy | Added in a proportion of 0.5 to 10 % of the product |
| 3 | Coffee bean crunch | 0.1 to 2.0 mm long side | Heavy | Added in a proportion of 0.5 to 10 % of the product |
| | Hazelnut crunch | 1 to 10 mm long side | Heavy | Added in a proportion of 0.5 to 10 % of the product |
| 4 | Grape powder | 0.025 to 1.0 mm long side | Heavy | Added in a proportion of 0.2 to 5 % of the product |
| | Dried raisin | 5 to 20 mm long side | Heavy | Added in a proportion of 0.5 to 10 % of the product |
| | Diced macadamia | 1 to 10 mm long side | Heavy | Added in a proportion of 0.5 to 10 % of the product |
| 5 | Almond praline | 1 to 10 mm long side | Heavy | Added in a proportion of 0.5 to 10 % of the product |
| | Waffle crunch | 3 to 20 mm long side | Light | Added in a proportion of 0.5 to 10 % of the product |
| | Rock salt | 0.1 to 2.0 mm long side | Heavy | Added in a proportion of 0.2 to 5 % of the product |
| 6 | Diced dried strawberry | 3 to 20 mm long side | Heavy | Added in a proportion of 0.5 to 10 % of the product |
| | Diced pineapple | 1 to 10 mm long side | Heavy | Added in a proportion of 0.5 to 10 % of the product |
| | One-eighth-cut dried cranberry | 2 to 10 mm long side | Heavy | Added in a proportion of 0.5 to 10 % of the product |
| 7 | Freeze-dried strawberry | 2 to 7 mm diameter | Light | Added in a proportion of 0.5 to 10 % of the product |
| | Green pepper | 1 to 6 mm long side | Heavy | Added in a proportion of 0.5 to 10 % of the product |
| | Milk chip | 1 to 6 mm long side | Heavy | Added in a proportion of 0.5 to 10 % of the product |
| 8 | Marron chip | 1 to 6 mm long side | Heavy | Added in a proportion of 0.5 to 10 % of the product |
| | Biscuit crunch | 1 to 6 mm long side | Heavy | Added in a proportion of 0.5 to 10 % of the product |
| | Almond crunch | 1 to 6 mm long side | Heavy | Added in a proportion of 0.5 to 10 % of the product |
| 9 | Diced dried apple | 2 to 10 mm long side | Heavy | Added in a proportion of 0.5 to 10 % of the product |
| | Crepe crunch | 1 to 10 mm long side | Heavy | Added in a proportion of 0.5 to 10 % of the product |

With respect to a shape of the chocolate, chocolate having the blending ranges shown in Table 1 was formed into tablet-shaped chocolate of 35 to 45 g, and the respective ingredients in Table 2 were sprinkled thereto to produce nine products.

A shape of chocolate is not limited to a tablet shape but may be appropriately changed to, for example, a block shape depending on a shape of a mold. Further, a weight of chocolate is not limited to 35 to 45 g but may be, for example, 5 to 60 g. Furthermore, when edible solid ingredients having a light specific gravity and edible solid ingredients having a heavy specific gravity are both present, a texture such as chewiness varies and becomes enjoyable. However, a plurality of edible solid ingredients having approximately similar specific gravities may be included, or only one edible solid ingredient may be used. Further, the edible solid ingredient 22 having a light specific gravity and the edible solid ingredient 21 having a heavy specific gravity may not be separately sprinkled but may be sprinkled at the same time.

The present invention is not limited to contents of the above-described embodiments and Examples but can be modified in various manners within the scope of the claims.

### INDUSTRIAL APPLICABILITY

According to the present invention, chocolate to which an edible solid ingredient is attached can be produced by simple equipment in a low cost and safely as well as in a large amount and stably, and can be widely introduced into a market as commercial confectionery. As a result, a new category of a "premium chocolate tablet" can be created in categories of chocolate tablets, and this can stimulate the entire market of chocolate tablets and has large industrial applicability.

### DESCRIPTION OF REFERENCE CHARACTERS

10: mold
11: containing recess
12: chocolate
12F: chocolate surface
19: pressing surface
20: stamping machine
21: edible solid ingredient (having a heavy specific gravity)
22: edible solid ingredient (having a light specific gravity)
25: vacuum device

## Claims

1. A method for producing chocolate, comprising:
a filling step of filling liquid chocolate into a mold;
a sprinkling step of sprinkling an edible solid ingredient onto the chocolate in the mold;
a first attaching step of attaching a specific ingredient in the edible solid ingredient sprinkled onto the chocolate in the mold to the chocolate by vibrating the mold;
a second attaching step of pressing the edible solid ingredient sprinkled onto the chocolate by using a pressing surface corresponding to a planar shape of chocolate to be produced to attach the edible solid ingredient to the chocolate; and
a step of cooling the chocolate along with the mold and solidifying the chocolate in the mold and removing from the mold the solidified chocolate to which the edible solid ingredient is attached,
**characterized in that**
the edible solid ingredient includes a first edible solid ingredient having a light specific gravity and a second edible solid ingredient having a heavy specific gravity,
the first edible solid ingredient having the light specific gravity and the second edible solid ingredient having the heavy specific gravity are separately sprinkled,
the specific ingredient attached to the chocolate at the first attaching step includes the second edible solid ingredient having a heavy specific gravity,
the edible solid ingredient attached to the chocolate at the second attaching step mainly includes the first edible solid ingredient having the light specific gravity,
the light specific gravity of the first edible solid ingredient is 0.05 to 0.35 when that of water of 4°C is 1, and the heavy specific gravity of the second edible solid ingredient is 0.35 to 1.50 when that of water of 4°C is 1,
a removing step of sucking and removing an excessive edible solid ingredient which is sprinkled onto the chocolate in the mold and is not attached to the chocolate after the second attaching step.

2. A method for producing chocolate according to claim 1, wherein the filling step comprises a step of pouring into the mold liquid chocolate which is melted at a normal temperature from 20 to 30°C and whose temperature is then adjusted to 30°C.

## Patentansprüche

1. Verfahren zum Herstellen von Schokolade, mit:
einem Füllschritt, bei dem flüssige Schokolade in eine Form gefüllt wird;
einem Bestreuungsschritt, bei dem eine essbare feste Zutat auf die Schokolade in der Form gestreut wird;
einem ersten Anlagerungsschritt, bei dem eine spezifische Zutat in der auf die Schokolade gestreuten essbaren festen Zutat der Schokolade durch Vibrieren der Form angelagert wird;
einem zweiten Anlagerungsschritt, bei dem die auf die Schokolade gestreute essbare feste Zutat unter Verwendung einer Pressfläche, die einer ebenen Form von herzustellender Schokolade entspricht, auf die Schokolade gepresst wird, um die essbare feste Zutat der Schokolade anzulagern; und
einem Schritt, bei dem die Schokolade zusammen mit der Form abgekühlt und die Schokolade in der Form verfestigt wird und bei dem die verfestigte Schokolade, an der die essbare feste Zutat angelagert ist, aus der Form entfernt wird,
**dadurch gekennzeichnet, dass**
die essbare feste Zutat eine erste essbare feste Zutat mit einem leichten spezifischen Gewicht und eine zweite essbare feste Zutat mit einem schweren spezifischen Gewicht enthält,
die erste essbare feste Zutat mit dem leichten spezifischen Gewicht und die zweite essbare feste Zutat mit dem schweren spezifischen Gewicht separat gestreut werden,
die spezifische Zutat, die bei dem ersten Anlagerungsschritt der Schokolade angelagert wird, die zweite essbare feste Zutat mit einem hohen spezifischen Gewicht enthält,
die essbare feste Zutat, die bei dem zweiten Anlagerungsschritt der Schokolade angelagert wird, hauptsächlich die erste essbare feste Zutat mit dem leichten spezifischen Gewicht enthält,
das leichte spezifische Gewicht der ersten essbaren festen Zutat 0,05 bis 0,35 beträgt, wenn dasjenige von Wasser bei 4°C 1 ist, und das schwere spezifische Gewicht des zweiten essbaren festen Bestandteils 0,35 bis 1,50 beträgt, wenn dasjenige von Wasser bei 4°C 1 ist,
ein Entfernungsschritt vorgesehen ist, bei dem eine überschüssige essbare feste Zutat, die auf die Schokolade in der Form gestreut wird und nach dem zweiten Anlagerungsschritt nicht an der Schokolade angelagert ist, abgesaugt und entfernt wird.

2. Verfahren zum Herstellen von Schokolade nach Anspruch 1, wobei der Füllschritt einen Schritt des Eingießens von flüssiger Schokolade in die Form umfasst, die bei einer normalen Temperatur von 20 bis 30°C geschmolzen wird und deren Temperatur dann auf 30°C eingestellt wird.

## Revendications

1. Procédé pour la production de chocolat, comprenant :
une étape de remplissage où l'on remplit du chocolat liquide dans un moule ;
une étape de saupoudrage où l'on saupoudre un ingrédient solide comestible sur le chocolat dans le moule ;
une première étape de fixation où l'on fixe un ingrédient spécifique, dans l'ingrédient solide comestible saupoudré sur le chocolat dans le moule, au chocolat par vibration du moule ;
une deuxième étape de fixation où l'on presse l'ingrédient solide comestible saupoudré sur le chocolat en utilisant une surface de pressage correspondant à une forme planaire de chocolat devant être produit pour fixer l'ingrédient solide comestible au chocolat ; et
une étape de refroidissement du chocolat ainsi que du moule et de solidification du chocolat dans le moule et de retrait du moule du chocolat solidifié auquel l'ingrédient solide comestible est fixé,
**caractérisé en ce que**
l'ingrédient solide comestible comprend un premier ingrédient solide comestible possédant une gravité spécifique légère et un deuxième ingrédient solide comestible possédant une gravité spécifique lourde,
le premier ingrédient solide comestible possédant la gravité spécifique légère et le deuxième ingrédient solide comestible possédant la gravité spécifique lourde sont saupoudrés séparément,
l'ingrédient spécifique fixé au chocolat à la première étape de fixation comprend le deuxième ingrédient solide comestible possédant une gravité spécifique lourde,
l'ingrédient solide comestible fixé au chocolat à la deuxième étape de fixation comprend principalement le premier ingrédient solide comestible possédant la gravité spécifique légère,
la gravité spécifique légère du premier ingrédient solide comestible est de 0,05 à 0,35 lorsque celle de l'eau à 4 °C est de 1, et la gravité spécifique lourde du deuxième ingrédient solide comestible est de 0,35 à 1,50 lorsque celle de l'eau à 4 °C est de 1,
une étape d'élimination où l'on aspire et l'on élimine un ingrédient solide comestible en excès qui est saupoudré sur le chocolat dans le moule et qui n'est pas fixé au chocolat après la deuxième étape de fixation.

2. Procédé pour la production de chocolat selon la revendication 1, l'étape de remplissage comprenant une étape de versement, dans le moule, de chocolat liquide qui est fondu à une température normale de 20 à 30 °C et dont la température est ensuite ajustée à 30 °C.
